# DEMANDE DE BREVET EUROPEEN

(11) **EP 1 418 501 A1**
(43) Date de publication de la demande: **12.05.2004**
(21) Numéro de dépôt: 02024884.5
(22) Date de dépôt: 08.11.2002
(51) Int. Cl.: G06F 9/50

(54) **Méthode d'administration d'applications sur des machines virtuelles**

(71) Demandeur: Dunes Technologies S.A., 1002 Lausanne (CH)
(72) Inventeur: Broquère, Stéphane, 1202 Genève (CH); Hochuli, Stefan, 1025 St. Sulpice (CH); Fournie, Vincent, 1003 Lausanne (CH); Saradini, David, 1007 Lausanne (CH)
(74) Mandataire: Wenger, Joel-Théophile

(57) **Abrégé**

Méthode d'administration d'applications, mettant en oeuvre au moins deux machines physiques reliées par des moyens de communication, ces machines comprenant une structure physique sur laquelle est chargée une première couche logicielle adaptée à cette machine ainsi qu'une seconde couche formant un couche virtuelle sur laquelle viennent fonctionner des machines virtuelles, ces dernières comprenant au moins une application, cette méthode comprenant les étapes suivantes:
- définition par le processus d'adeministration du système d'un service regroupant plusieurs applications,
- communication entre le processus d'administration et chaque couche virtuelle afin de déterminer l'état des machines virtuelles associées à ladite couche virtuelle,
- assignation d'une machine virtuelle sur l'une des couches virtuelles compte tenu des caractéristiques de l'application.

## Description

La présente demande concerne le domaine des machines connectées à des réseaux de télécommunications, en particulier la gestion de machines virtuelles.

Le terme virtuel est très à la mode et désigne généralement la modélisation et la simulation d'un système réel.

Dans le domaine des machines informatiques, un exemple classique est la virtualisation d'un système de stockage.

En lieu et place de l'accès direct sur un disque dur, une machine accède un disque virtuel dont elle ne connaît pas les spécifications physiques. Les requêtes de stockage sont traitées par une interface appropriée qui réceptionne les demandes de stockage ou de récupération et effectue la conversion avec le ou les disques physiques. Le parc matériel peut d'ailleurs être hétérogène, par exemple des unités de diverses natures (disque magnétique, mémoire Flash etc) mais la représentation virtuelle est unique pour l'utilisateur final.

Le principe est simple, lorsque la demande de stockage sur cette unité virtuelle excède la capacité physique, de nouvelles unités physiques sont ajoutées d'une manière transparente pour l'utilisateur.

Des sociétés telles que VMWare®, IBM® ou Connectix® proposent des solutions pour la fourniture de solutions logicielles vers une étape suivante de la virtualité, à savoir la création d'une machine complète virtuelle y compris la partie système opérationnel.

Cette solution permet de partager une machine physique en créant plusieurs machines virtuelles, chacune répondant à des critères propres, en terme de moyens de stockage, moyens de calcul et moyens de communication.

Les applications fonctionnant sur une telle machine virtuelle ont l'avantage d'être facilement transportable car indépendante d'une machine physique. Cette dernière peut évoluer avec l'avancement de la technologie sans que l'application nécessite de modifications.

Comme expliqué plus haut, si des besoins plus importants se faisaient sentir pour une application donnée, la machine physique est remplacée puis l'application est redémarrée sans modification. Les nouveaux interfaces écran, réseau ou autres sont traités de manière spécifique sur la couche locale de la machine et une image unique virtuelle est donnée vis-à-vis de l'application par la machine virtuelle.

Cette configuration simplifie la maintenance et le test de nouvelles applications. En effet, sur une même machine, cette application pourra fonctionner sur plusieurs environnements logiciels d'une manière transparente.

Cette configuration a des limites puisqu'elle ne s'applique que sur une machine. Dans la configuration réseau, un serveur est initialisé par cette machine virtuelle et plusieurs ordinateurs peuvent faire fonctionner des applications différentes chacune pouvant être attachée à un système opérationnel propre (Linux, Windows® 95/98, Windows® NT ...).

Cette virtualité présente des limites car elle ne prend en compte qu'une machine et seul un niveau d'application est possible.

Le but de la présente invention est de proposer une méthode permettant d'utiliser plusieurs machines virtuelles incluant des applications et de fédérer ces applications en vue de la formation de services.

Ce but est atteint par une méthode d'administration d'applications, mettant en oeuvre au moins deux machines physiques reliées par des moyens de communication, ces machines comprenant une structure physique sur laquelle est chargée une première couche logicielle adaptée à cette machine ainsi qu'une seconde couche formant une couche virtuelle sur laquelle vient fonctionner des machines virtuelles, ces dernières comprenant au moins une application, cette méthode comprenant les étapes suivantes:
- chargement d'un programme de contrôle de machine virtuelle associé à la couche virtuelle,
- connexion d'au moins deux machines physiques pour la formation d'un réseau de machines physiques,
- établissement d'un dialogue entre le programme de contrôle de machine virtuelle et un processus d'administration du système,
- établissement d'un réseau de machines physiques comportant les couches virtuelles,
- définition par le processus d'administration du système d'un service regroupant plusieurs applications,
- communication entre le processus de gestion et chaque couche virtuelle afin de déterminer l'état des machines virtuelles associées à ladite couche virtuelle,
- assignation d'une machine virtuelle sur l'une des couches virtuelles compte tenu des caractéristiques de l'application.

Cette méthode est donc basée sur la définition d'un service qui fait appel à une ou plusieurs applications. Il est à noter qu'une machine virtuelle peut comprendre une ou plusieurs applications et que ces machines virtuelles sont dirigées sur une machine physique disposant d'une couche virtuelle compatible avec la machine virtuelle de l'application. Le rôle du processus d'administration est le contrôle de chaque application afin de visualiser le fonctionnement d'un service regroupant plusieurs applications.

Ce processus de gestion peut également déterminer si un service est actif ou disponible puisqu'il connaît l'ensemble des applications qui le compose. Un service peut être par exemple un site Internet de e-commerce utilisant une application de base de données pour la liste des produits en vente, une application de présentation des information pour la partie interface utilisateur et une application de payement sécurisé. Chacune de ces applications, fonctionnant sur une machine virtuelle, peut être assignée à des couches virtuelles différentes selon les besoins de ces applications. L'application de base de données aura besoin de grande capacité de stockage alors que l'application de présentation utilisera des moyens de communication rapides.

L'invention se place au niveau de la gestion des applications, de l'optimisation de ressources pour ces applications et d'une manière plus générales, permet de suivre l'évolution de ces applications en terme de capacité de stockage, de moyens de communication et de puissance de calcul.

En effet, le processus d'administration effectue des tâches de surveillance des applications et anticipe les besoins futurs. En cas d'adjonction ou de remplacement d'une machine physique, les applications utilisant cette machine sont réorientées sur d'autres machines grâce au processus d'administration. Celui-ci interrompt l'application pour déplacer les données stockées propre à cette application de l'ancienne machine vers la nouvelle machine. Une fois que ce processus de copie a été réalisé, l'application est assignée à cette nouvelle machine et peut redémarrer.

L'invention sera mieux comprise grâce à la description détaillée qui va suivre et qui se réfère aux dessins annexés qui sont donnés à titre d'exemple nullement limitatif, à savoir:
- la figure 1 décrit l'état de la technique de fonctionnement d'une machine virtuelle,
- la figure 2 décrit la structure de l'invention.

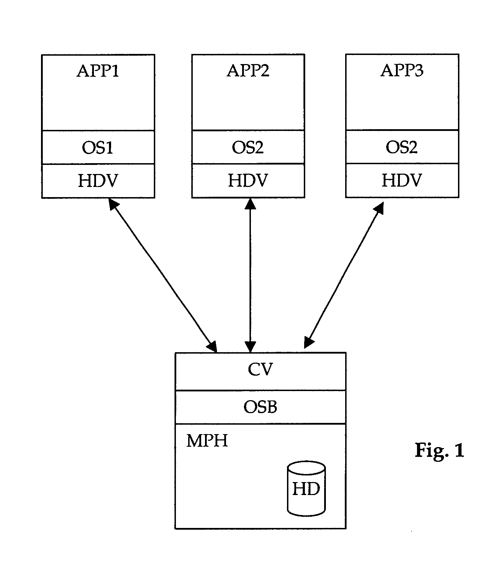

Sur la figure 1, la configuration telle que disponible actuellement est représentée. Une machine physique MPH dispose d'un système opérationnel OSB tel que Linux, Windows® NT/2000. Ce système opérationnel prend en compte la configuration matérielle de la machine physique et gère les ressources telles que l'unité de stockage HD. Ce système est spécifique au matériel utilisé c'est-à-dire qu'il dispose de programmes (driver) propres au matériel considéré (écran, carte réseau, disque dur etc..).

Une fois le système opérationnel installé, on charge la couche virtuelle CV qui va permettre l'accès à une machine virtuelle. A partir de cette étape, l'on dispose de la capacité d'opérer des machines génériques pour lesquelles, quelle que soit la configuration matérielle, le comportement de ces machines sera semblable, en particulier les interfaces vers les ressources physiques de la machine.

Sur cette couche virtuelle, l'on peut placer une machine virtuelle comprenant chacune une application APP1, APP2, APP3 utilisant des systèmes opérationnels différents (OS1 et OS2) selon les besoins. Les accès vers la couche virtuelle CV se font au travers d'une couche matérielle virtuelle HDV. Prenons l'exemple d'un accès vers un port série, l'application APPL1 accède un pilote de port série virtuel qui délivre toutes les fonctionnalités que l'on peut attendre d'un tel programme. Ce pilote transmet les instructions à la couche virtuelle qui convertit les instructions selon le port série effectivement installé.

Cette configuration de machine virtuelle permet de faire fonctionner plusieurs applications utilisant des environnements logiciels différents.

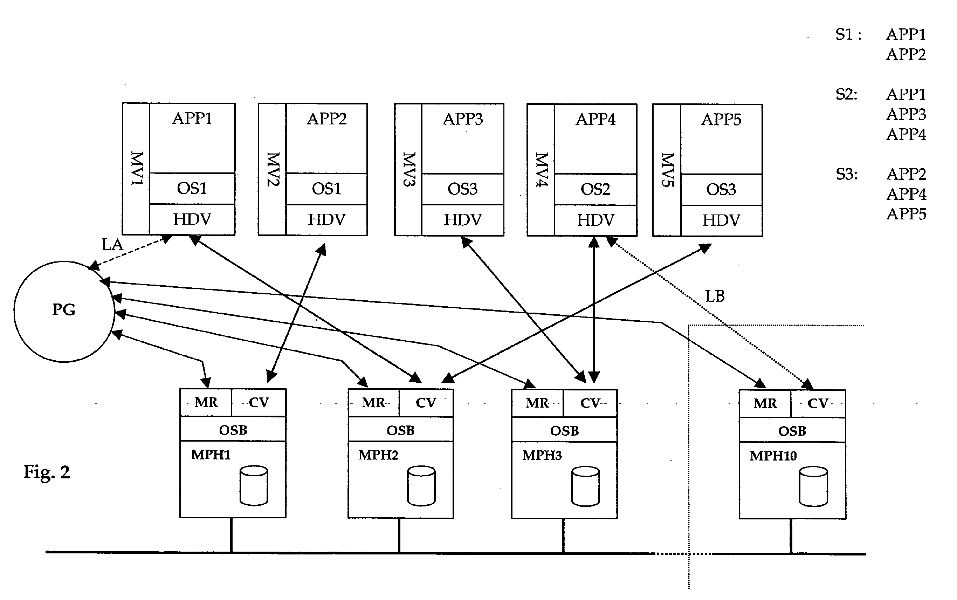

La figure 2 illustre la configuration de l'invention dans laquelle deux importantes innovations ont été apportées.

Associé à chaque couche virtuelle CV se trouve un programme spécifique de contrôle de processus MR qui est en charge d'administrer le fonctionnement de ou des machines virtuelles MV utilisant cette machine physique. Ce contrôle de processus MR est en liaison avec un processus d'administration PG qui centralise toutes les informations liées aux différentes machines.

Ce processus d'administration PG a les fonctions suivantes:
- recensement des machines physiques MPH, leurs configurations et leurs états,
- assignation des applications APP sur l'une ou l'autre des couches virtuelles CV,
- supervision du fonctionnement de chaque machine virtuelle MV,
- arrêt d'une machine virtuelle MV et déplacement vers une autre couche virtuelle, ce déplacement étant accompagné les fichiers propres à cette machine virtuelle (base de données, programmes)
- création de services S1, S2, S3 dépendant de plus d'une application,
- supervision du fonctionnement d'un service par la supervision des applications APP ou des machines virtuelles MV le composant.

Une des premières tâches du processus PG est l'inventaire des modules sur un réseau donné. Cet inventaire recense d'une part les machines physiques MPH, leur configuration en terme de ressources de stockage, de traitement et de communication, et d'autre part les machines virtuelles MV avec leurs applications APP destinées à fonctionner sur une des machines physiques au travers de la couche virtuelle CV.

Une fois l'inventaire effectué, l'étape suivante consiste à définir des services regroupant plusieurs applications. Le processus d'administration assigne ensuite les diverses machines virtuelles aux machines physiques, en fonction des besoins de chacune de celles-ci. L'exemple d'un site de e-commerce convient bien à ce type de structure. Ce site est composé par une première application APP1 d'interfaçage graphique avec l'utilisateur et l'accent sera mis sur les capacités de connexion à haut débit. Une deuxième application APP2 gère la base de données produits et clients. Elle est caractérisée par des moyens de stockage important et la troisième application APP3 est une application de payement sécurisé. Ces trois applications forment le service S1 de e-commerce et doivent être opérationnelles pour considérer que le site est en ordre.

La prochaine étape est le démarrage des machines virtuelles ou plus généralement un service qui provoquera le démarrage de plusieurs machines virtuelles.

La notion de service regroupant plusieurs applications permet une gestion plus détaillée. Il est possible d'associer des règles d'une part sur les applications composants ce service et d'autre part sur les machines physiques sur lesquelles fonctionnent ces applications. Il est à noter qu'un service peut demander plusieurs applications identiques qui auront comme conditions de fonctionner au moins sur deux machines physiques différentes.

Une des conditions importantes relative à un service est l'ordre de démarrage des différentes applications. En effet, certaines applications nécessitent la présence d'autres applications pour fonctionner et ne peuvent en conséquence démarrer avec celles-ci.

De même qu'une application peut être stoppée, copiée et redémarrée, un service dispose des mêmes propriétés. La copie tiendra compte des règles du service et si deux machines physiques sont une des conditions de fonctionnement, le processus de copie tiendra compte de cette règle et s'assurera que l'application A fonctionne sur une machine différente que l'application B.

Le processus d'administration PG comprend également une surveillance dynamique du service. Selon l'exemple d'un site Internet qui dispose d'au moins deux applications d'interface utilisateur A et B et d'une application base de données, si le processus PG constate que l'activité des applications A et B dépasse une valeur limite, ce processus démarre une nouvelle application C de même nature.

En cas de remplacement de la machine MPH3 sur laquelle fonctionne l'application APP3 grâce à la machine virtuelle MV3, le processus PG stoppe la machine virtuelle MV3 pour l'assigner sur la machine MPH2 par exemple. Avant de redémarrer cette machine virtuelle MV3, il est nécessaire que les données de payement stockées dans l'unité de stockage de la machine MPH3 soient transférées sur la machine MPH2.

Il est à noter que ces données sont directement liées à l'application APP3 et forment un ensemble indissociable. L'organisation et la division de ce bloc de données est du ressort de l'application elle-même.

La copie des données une fois effectuée, la machine virtuelle MV3 et son application APP3 peuvent redémarrer et le service S1 est à nouveau disponible.

Selon le type de réalisation, la couche virtuelle CV et le système opérationnel de base OPB peuvent former qu'un seul programme. Les fonctionnalités sont simplement réunies dans un seul produit au lien de deux mais les deux fonctions existent à savoir une couche liée au matériel vers la machine physique et une couche de virtualité CV pour offrir au monde extérieur une image unique.

De la même manière, le programme spécifique de contrôle de processus MR peut être directement inclus dans la couche virtuelle CV.

Le processus d'administration PG comprend également des outils d'optimisation. En effet, il se peut que le coût d'exploitation d'une machine diffère d'une autre machine, selon la technologie utilisée, les moyens de sauvegarde (alimentation sans coupure, système RAID) et il est possible de déterminer le coût de fonctionnement d'une application et par là même d'un service.

Au delà des caractéristiques matérielles d'une machine, il est possible de tenir compte des facteurs coûts et sécurité. Cette connaissance ouvre la porte à la délocalisation des machines physiques tel que représenté par la machine MPH10. Les pointillés indiquent que cette machine est localisée dans un endroit différent des autres machines. Ainsi, grâce à la configuration de l'invention, il est possible d'assigner les machines virtuelles non seulement sur des machines localement connectées mais également sur des machines physiquement installées dans d'autres sites selon la ligne pointillée LB.

Cette possibilité ouvre des perspectives nouvelles en matière de gestion d'un parc informatique. En effet, les ressources externes viennent en concurrence avec les ressources internes. Les seules contraintes sont au niveau des moyens de communication et la présence sur les machines délocalisées de la même couche de virtualité offert par les machines locales.

Lors de la configuration d'une application, les paramètres annexes de la machine physique tels que le coût par unité de stockage, de paquet transféré ou de temps CPU ainsi que le niveau de sécurité sont pris en compte. Il est possible lors de la configuration d'une machine virtuelle d'interdire à celle-ci d'être délocalisée, ceci pour des raisons de sécurité par exemple.

Le processus d'administration PG dispose de moyens de rapport afin d'établir des statistiques sur l'utilisation des machines virtuelles et des applications. Cet outil permet d'anticiper la demande et de faire évoluer le parc informatique avant d'être confronté à des surcharges du système.

Dans une autre forme de réalisation, la couche virtuelle n'a pas pour but de créer une machine virtuelle mais de faire exécuter un programme spécifique. Ceci est le cas par exemple de machines avec une couche Java^{TM} 2 Platform Enterprise Edition (J2EE^{TM}) sur laquelle des applications utilisant un module Enterprise Java Bean (EJB) fonctionnent. Selon l'invention, le programme de contrôle de processus MR est installé sur la machine physique et dialogue avec cette couche d'exécution J2EE^{TM}. La fonctionnalité est identique que pour les machines virtuelles à savoir que le processus d'administration PG recense les machines physiques ainsi que les applications, et établit la catalogue des machines physique disposant d'interpréteur d'un type particulier et des applications nécessitant ce type d'interpréteur.

Le rôle du processus d'administration est donc de fonctionner dans un univers hétérogène dans lequel des machines physiques sont initialisées avec des couches virtuelles pour le fonctionnement de machines virtuelles et d'autres machines sont initialisées selon des environnements particuliers tels que J2EE™.

Une fois le recensement effectué, le processus d'administration PG alloue le fonctionnement d'une application selon l'environnement souhaité par cette application.

Selon une forme particulière de réalisation, illustrée par la flèche LA de la figure 2, le processus d'administration PG dialogue également directement avec la machine virtuelle par un programme de contrôle approprié. Ainsi, même avant d'accéder aux ressources d'une couche virtuelle CV, le processus connaît l'état de l'application qui fonctionne sur cette machine et peut de ce fait accéder à un contrôle plus fin de l'application. En effet, en accédant directement à la machine virtuelle, il est possible de gérer plusieurs applications sur la même machine virtuelle. Bien que la machine virtuelle soit assignée à une couche virtuelle d'une machine physique, il peut y avoir plusieurs applications fonctionnant sur cette machine virtuelle. Les besoins de chaque application à l'intérieur d'une même machine virtuelle ainsi que les statistiques seront établies par application plutôt que par machine virtuelle.

## Revendications

1. Méthode d'administration d'applications (APP1, APP3, APP3), mettant en oeuvre au moins deux machines physiques reliées par des moyens de communication, ces machines comprenant une structure physique sur laquelle est chargée une première couche logicielle (OSB) adaptée à cette machine ainsi qu'une seconde couche formant une couche virtuelle (CV) sur laquelle vient fonctionner des machines virtuelles, ces dernières comprenant au moins une application (APP1, APP2, ... APP5), cette méthode comprenant les étapes suivantes:
- connexion d'au moins deux machines physiques pour la formation d'un réseau de machines physiques,
- chargement d'un programme de contrôle (MR) associé à la couche virtuelle (CV) de chaque machine physique,
- établissement d'un dialogue entre le programme de contrôle (MR) et un processus d'administration du système (PG),
- établissement d'un réseau de machines physiques comportant les couches virtuelles (CV),
- définition par le processus d'administration (PG) du système d'un service (S1, S2, S3) regroupant plusieurs applications (APP1, APP2, ... APP5),
- communication entre le processus d'administration (PG) et chaque couche virtuelle (CV) afin de déterminer l'état des machines virtuelles associées à ladite couche virtuelle,
- assignation d'une machine virtuelle sur l'une des couches virtuelles compte tenu des caractéristiques de l'application.

2. Méthode selon la revendication 1, **caractérisée en ce que** le programme de contrôle (MR) comprend des moyens pour déterminer l'état de chaque machine physique sur laquelle est placée une couche virtuelle (CV) et communique cet état au processus d'administration (PG) par des moyens de communication.

3. Méthode selon les revendications 1 et 2, **caractérisée en ce que** le programme de contrôle (MR) comprend des moyens pour déterminer l'état de chaque machine virtuelle associée à une couche virtuelle de la machine physique concernée et communique cet état au processus d'administration (PG) par des moyens de communication.

4. Méthode selon les revendications 1 à 3, **caractérisée en ce que** le processus d'administration (PG) effectue les étapes suivantes:
- détermination des caractéristiques des machines virtuelles (MV1, ...MV5) et des ressources nécessaires à leur fonctionnement,
- assignation d'une machine virtuelle avec la couche virtuelle d'une machine physique,
- surveillance de l'état de fonctionnement d'une machine virtuelle grâce au programme de contrôle (MR),
- association des états de chaque machine virtuelle composant un service,
- transmission de cet état à un opérateur.

5. Méthode selon la revendication 4, **caractérisée en ce que** le processus d'administration (PG) effectue les étapes suivantes lors d'un déplacement d'une machine virtuelle d'une première machine physique sur une seconde machine physique:
- transmission d'une instruction d'arrêt au programme de contrôle (MR) situé sur la première machine physique,
- établissement des données propres à la machine virtuelle arrêtée localisée sur la première machine physique,
- transfert de ces données vers la deuxième machine physique,
- assignation de la machine virtuelle stoppée vers la seconde machine physique,
- démarrage de la machine virtuelle.

6. Méthode selon la revendication 5, **caractérisée en ce que**, une fois la machine virtuelle démarrée avec succès, le processus d'administration (PG) transmet l'instruction au programme de contrôle (MR) de la première machine de supprimer les données propre à cette machine virtuelle.

7. Méthode selon l'une des revendications précédentes, **caractérisée en ce que** le processus d'administration (PG) comprend une définition des contraintes de fonctionnement des machines virtuelles relatives à un service et que l'assignation d'une machine virtuelle sur une couche virtuelle d'une machine physique ainsi qu'un déplacement de ladite machine virtuelle vers une autre couche virtuelle tient compte de ces contraintes.
